# EUROPEAN PATENT APPLICATION

(11) **EP 1 359 084 A1**
(43) Date of publication of application: **05.11.2003**
(21) Application number: 03076279.3
(22) Date of filing: 29.04.2003
(51) Int. Cl.: B62D 51/04

(54) **Work trolley for greenhouses**

(30) Priority: 01.05.2002 NL 1020506
(71) Applicant: Altech Logistiek B.V., 2671 CT Naaldwijk (NL)
(72) Inventor: Verschoor, Cornelis Jacob, 2671 CT Naaldwijk (NL)
(74) Representative: Ferguson, Alexander

(57) **Abstract**

Work trolley (1) for use in greenhouses, the work trolley being provided with means for detecting an object, for instance a person, the detection means as a result of the detection action delivering a registration signal, and with means for driving the work trolley, as well as means for operating the drive means in response to the received registration signal.

## Description

The invention relates to a work trolley for use in greenhouses.

Electrically driven work trolleys are known and used in the aisles between the seed-beds for for instance harvesting roses. The workman picks the roses while standing on the work trolley and hangs them in a container that also stands on the work trolley. A pedal has been provided to activate and deactivate a motor of the work trolley to drive it and have it come to a standstill. Heating pipes situated on either side of the aisle are used to ride over.

The known work trolley has the drawback that the workmen standing on it get little varied physical movement and they will mostly have a crooked physical position during work: one has to reach from the work trolley into or near the seed-bed for instance for harvesting. From an ergonomic point of view this is particularly disadvantageous, especially because the activities will usually have to be carried out for longer time spans on end.

It is an object of the invention to improve on this.

To that end the invention provides a work trolley for use in greenhouses, the work trolley being provided with means for detecting an object, for instance a person, the detection means delivering a registration signal as a result of the detection action, and with means for driving the work trolley, as well as means for operating the drive means in response to the received registration signal. The workman can now work standing behind/in front of/next to the work trolley and move through the aisle, the work trolley following the workman of its own accord or running ahead of the workman of its own accord. As a result the workman gets more physical movement as a result of which he remains physically and mentally healthier. Crooked postures are limited because there is more freedom of movement and because one is able to stand near or in the seed-bed. No operation actions by the workman are necessary for letting the work trolley follow or run ahead of the workman. As a result the nett picking time and efficiency are increased. Another advantage is that several work trolleys can run one behind the other. For instance when the first work trolley is fully loaded, loading the next work trolley situated behind it can be proceeded with.

In a preferred embodiment the detection means comprise sensors having different distance ranges. For instance when one of the sensors does not detect the person, such a registration signal can be delivered by said sensor that the operation means activate the trolley drive to move the work trolley towards the person. When the work trolley has moved sufficiently close towards the person that said person is indeed detected by said sensor, such a registration signal is delivered by said sensor to the operation means that the trolley drive is deactivated. By providing several sensors having different distance ranges more freedom is provided for recording the work trolley's behaviour of following or running ahead. When using several sensors they are usually designed to deliver the registration signal as a binary signal (either an object/person is detected or not).

Preferably a first and second sensor have been provided, having distance ranges of O-L₁ (first distance range) and O-L₂ (second distance range), respectively, in which L₁<L₂. It is possible with this embodiment to let the work trolley follow the person or to let the work trolley run ahead of the person within a distance range to the work trolley approximately limited by L₁ and L₂. In an embodiment, the operation means have been adapted for activating the trolley drive in order to move the work trolley in a retreating direction when the first sensor detects the object, and subsequently to deactivate the trolley drive when the first sensor no longer detects the object, and to activate the trolley drive to move the work trolley in an approaching direction when the second sensor does not detect the object, and subsequently to deactivate the trolley drive when the second sensor does detect the object again. Said embodiment is one of the possibilities with regard to the moments of and conditions for activating and deactivating the trolley drive to let the work trolley follow the object or run ahead of the object, within a distance range that is approximately limited by L₁ and L₂.

In an advantageous manner a third sensor has been provided having a distance range of O-L₃ (third distance range) in which L₂<L₃. Said third sensor provides the possibility to let the work trolley stand in its place when the person leaves the third distance range for for instance having a coffee break or going to the toilet; it is thus prevented that the trolley drive remains activated despite the second sensor not detecting an object.

Preferably the operation means are adapted for deactivating the trolley drive when the third sensor does not detect the object. Said embodiment is one of the possibilities with regard to the moment of and the conditions for deactivating the trolley drive when the person leaves the third distance range.

In a preferred embodiment a fourth sensor has been provided having a distance range of O-L₄ (fourth distance range). The fourth sensor offers the possibility to let the work trolley move independently to the end of the aisle, the work trolley coming to a standstill when the glass (side) wall of the greenhouse comes in the fourth distance range.

In an advantageous manner the operation means are adapted for deactivating the trolley drive when the fourth sensor detects the object, and the operation means are provided with selection means for selecting this program option. This embodiment is one of the options with respect to the moment of and the conditions for deactivating the trolley drive when the (side) wall of the greenhouse comes within the fourth distance range. Because of the selection means for said program option, said function can be exercised independently from the functions of the first, second and third sensor discussed above.

In an advantageous manner the operation means are adapted for activating and/or deactivating the trolley drive, the registration signals of several sensors being used as condition for activation or deactivation. Said embodiment of the work trolley is connected to the redundancy with respect to the detection action of a sensor. As a result of a twig, leaf or the like, projecting in the range of vision of a sensor, a registration signal can namely be delivered as if a person were detected. As a result for instance the work trolley's desired behaviour of following or running ahead could be disrupted. By requiring that several sensors simultaneously have to detect an object in order for the trolley motor to be activated or deactivated, the chance of such disruptions is lowered: the chance that several sensors simultaneously detect a twig, leaf or the like, is relatively little. For instance for activating the trolley drive to move the work trolley in retreating direction it could in addition to the condition that the first sensor detects an object also be required that the second and/or third sensor detect an object. For instance when causing the work trolley to move automatically to the end of the aisle it could, in addition to the requirement that the fourth sensor detects an object, also be required that the third sensor detects an object for letting the trolley come to a standstill. In this way it is largely prevented that the work trolley comes to a standstill when the fourth sensor detects a twig, leaf or the like, instead of the (side) wall of the greenhouse. After all, when the fourth sensor detects a twig, the chance of the third sensor also perceiving a twig or the like is relatively small, so that the trolley drive will not be deactivated then.

In a preferred embodiment the first and second sensor are formed by a first and second photocell. The use of photocells has appeared to be advantageous because the detection action of the photocell for delivering the registration is less affected by twigs, leaves, stems or the like projecting into the aisle in the range of vision of the photocell.

Preferably the third sensor is formed by a third photocell.

In an advantageous manner the fourth sensor is formed by a fourth photocell.

In an advantageous manner L₁ = 500 mm and L₂ = 1000 mm. In this embodiment the work trolley follows or runs ahead, in a distance range that is advantageous for picking uses, of approximately 500 - 1000 mm to the person.

Preferably L₃ = 1500 mm. When the person removes itself further than 1500 mm from the work trolley, for instance to go to the toilet or have a coffee break, the work trolley no longer follows the person.

In one embodiment L₄ = 2000 mm. When causing the work trolley to move independently to the end of the aisle, the trolley drive is deactivated at 2000 mm from the (side) wall of the greenhouse.

Preferably the detection means are formed by an ultrasonic sensor. Its use offers the advantage that the registration signal is an analogous signal which is an indication for the distance to the detected object. The ultrasonic sensor can therefore be considered as one sensor having very many distance ranges. As a result the operation means may for instance be adapted such that the work trolley shows the same behaviour of following or of running ahead as in the embodiment having several sensors each having their own distance range, however in which now one single ultrasonic sensor suffices. The use of one single ultrasonic sensor offers a large freedom of choice in the work trolley's behaviour of following. For instance the function of following a person or of running ahead of a person, the function of deactivating the trolley drive in case of the workman going to the toilet or having a coffee break, and the function of independently moving towards the end of the aisle can be realised with one ultrasonic sensor. The use of an ultrasonic sensor is particularly advantageous when it regards crops from which no twigs or the like project into the aisle.

It is noted that the detection means, in the form of the aforementioned photocells or otherwise, can be arranged on the work trolley in an adjustable manner. Thus it is possible to prevent false detections when working in aisles with low branches.

In a preferred embodiment the operation means are formed by a control unit.

Preferably the control unit is a programmable plc control with data entering means and data storage means. With the registration signal as input, the moments of activation/deactivation of the work trolley can than be defined at choice: the work trolley's behaviour of following or running ahead can be programmed such that the work trolley for instance follows at a shorter or larger distance, or such that the area in which one is able to move freely without the trolley drive being activated is made smaller or larger. When using photocells, a photocell should be chosen with suitable distance ranges. It is also possible to program time intervals to activate or deactivate the trolley drive with a delay to improve the work trolley's dynamic behaviour. It is also possible to program the control unit such that yet extra or other functions can be carried out by the work trolley, for instance the function to let the work trolley move independently to the end of the aisle and let it come to a standstill there. Another possible function is to bring the work trolley from an "activated" situation into a "deactivated" situation when the sensor(s) has (have) not detected an object for for instance 5 minutes. The "activated" and "deactivated" situation here relate to the operation of the work trolley as a whole. The functions can be carried out simultaneously or independent from each other.

In an advantageous manner the control unit is provided with selection means for selecting program options of the control unit. For instance it is possible with the selection means to select the program option that the work trolley has to follow the person, or has to run ahead of the person, or for instance the program option that the work trolley has to move independently to the end of the aisle.

In a preferred embodiment the work trolley is provided with wheels for riding over heating pipes situated on either side of a path in the greenhouse, and with running wheels, the running wheels extending further downwards from the work trolley than the wheels for riding over the heating pipes. In the known arrangement in which the work trolley also runs over the heating pipes, the heating pipes will bend through at that location between two adjacent supports due to the weight of the work trolley and the workman standing on it, as a result of which moving on is made difficult: in case of severe bending through the work trolley has to move upwards too steeply in the direction of a support as a result of which slipping may occur during moving onwards. One is unable to get over the "hill" formed by the heating pipes at the location of a support. On the other hand there is the risk that one slides to the "valley" with the work trolley, which valley is formed by the heating pipe in between two adjacent supports. In the arrangement according to the invention the work trolley is less heavy during riding so that the heating pipes bend through less far. As a result the work trolley is able to move over the heating pipes and come to a standstill in a more reliable manner as to location. Problems with "hills" and "valleys" in the heating pipe can be avoided. When the work trolley has not been placed on heating pipes it is placed on a bottom with the running wheels and can thus be moved rolling on the running wheels.

In an advantageous manner the work trolley has been provided with a conveyor belt for rolling a container onto the work trolley, said conveyor belt slightly protruding with respect to the bearing surface of the work trolley. Thus it is no longer necessary to lift a container onto the work trolley, due to driving the conveyor belt, a container, standing ready at approximately the same height as the bearing surface of the work trolley, can simply be rolled onto the work trolley. In the same manner the filled container can be rolled off from the work trolley.

Preferably a conveyor belt has been provided on both ends of the work trolley, the conveyor belt having a circulation direction that is transverse to the direction of movement of the work trolley. In this way contact of the container with the bearing surface of the work trolley during the rolling on and rolling off of the container is prevented as a result of which the container can easily be rolled on and off from the work trolley.

In an embodiment a separate motor has been provided for driving the conveyor belt.

In an advantageous manner the drive means are formed by a trolley motor.

An embodiment of the work trolley according to the invention will below be described on the basis of the figures, in which:
Figure 1 schematically shows a cross-section of a top view, rear view and side view of the work trolley according to the invention;
Figure 2 shows a view in perspective of the work trolley shown in figure 1;
Figure 3 shows a front view of the operation unit of the work trolley shown in figure 1 and 2;
Figure 4 shows a top view of the work trolley of the figures 1 and 2 with a container placed on it, riding on heating pipes placed on either side of the aisle;
Figure 5 shows the work trolley of the figures 1 and 2 next to a container placed on a frame;
Figure 6 shows a view according to figure 5 in which a container is rolled onto the work trolley;
Figure 7 shows a view according to figure 5 in which a container has been entirely rolled onto the work trolley.

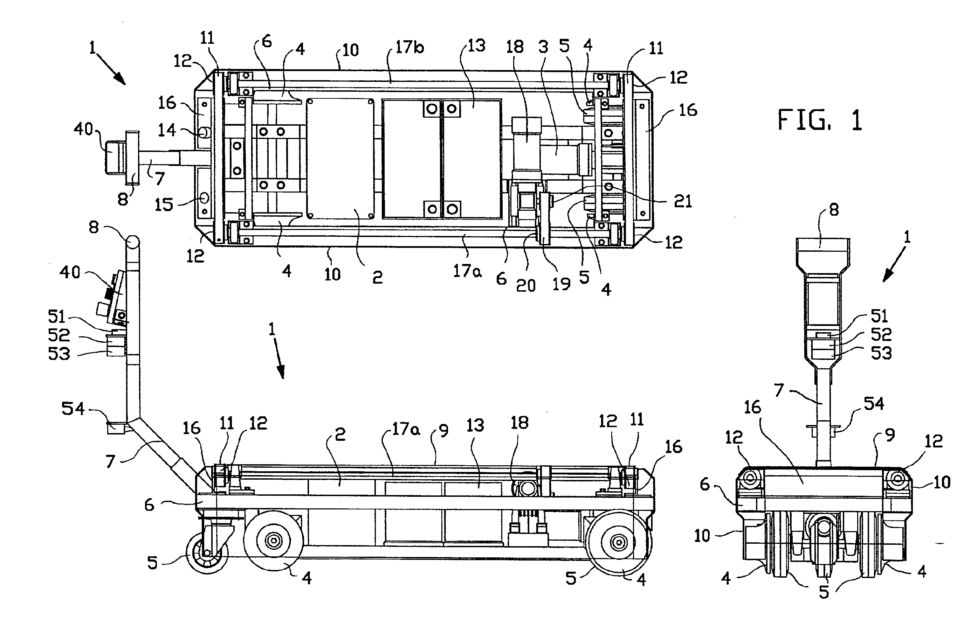

The work trolley 1 shown in figure 1 has a control unit 2 which is operatively connected to a first, second, third and fourth photocell 51, 52, 53, 54, respectively, and to a trolley motor 3 for driving the pair of trolley wheels 4 situated near the trolley motor 3 in a desired direction. The control unit 2 has been designed as a programmable plc control. The trolley wheels 4 can ride over heating pipes along an aisle in a greenhouse. The first, second, third and fourth photocell 51, 52, 53, 54 have a first, second, third and fourth distance range, respectively, of 0 - 500 mm, 0-1000 mm, 0 - 1500 mm and 0 - 2000 mm. A battery 13 has been provided for providing the various parts of the work trolley 1 that need power, such as among others the control unit 2, the trolley motor 3 and the first, second, third and fourth photocell 51, 52, 53, 54 with electric power. Connection point 14 and indicator 15 have been provided to be able to charge the battery 13 and indicate to which extent the battery 13 has been charged, respectively.

Three running wheels 5 have been provided with which the work trolley 1, when it has not been placed on heating pipes, rests on the floor. To that end the running wheels 5 extend further downwards from the work trolley 1 than the trolley wheels 4. The running wheel 5 that is situated near the front end of the work trolley 1 is a swivel castor to permit steering the work trolley 1 when riding over the floor.

The work trolley 1 has a frame 6 to which an upright arm 7 has been attached having a handle 8, an operation unit 40, and the first, second, third and fourth photocell 51, 52, 53, 54. The work trolley 1 has furthermore been provided with a bearing surface 9 made from steelplate, which at the location of both longitudinal sides of the work trolley 1 changes into side plates 10. At the ends of the bearing surface 9 at the location of the front and rear side of the work trolley 1, a conveyor belt 11 designed like a geared belt has been provided each time, which projects slightly above the bearing surface 9. To that end the upper loop of the conveyor belt 11 is supported by a supporting element 16 provided at both the front and the rear side of the work trolley 1. Each conveyor belt 11 runs about a pair of conveyor belt wheels 12 provided at the front and rear side of the work trolley 1. Of each pair of conveyor belt wheels 12 the wheels situated at the same longitudinal side of the work trolley 1 are coupled by means of respective shafts 17A, 17B. Conveyor belt motor 18 drives shaft 17A by means of a transmission with a belt 19 and pulleys 20, 21, in order to bring the conveyor belts 11 into motion in a wanted direction. Shaft 17B is also brought into rotation by means of the conveyor belts 11.

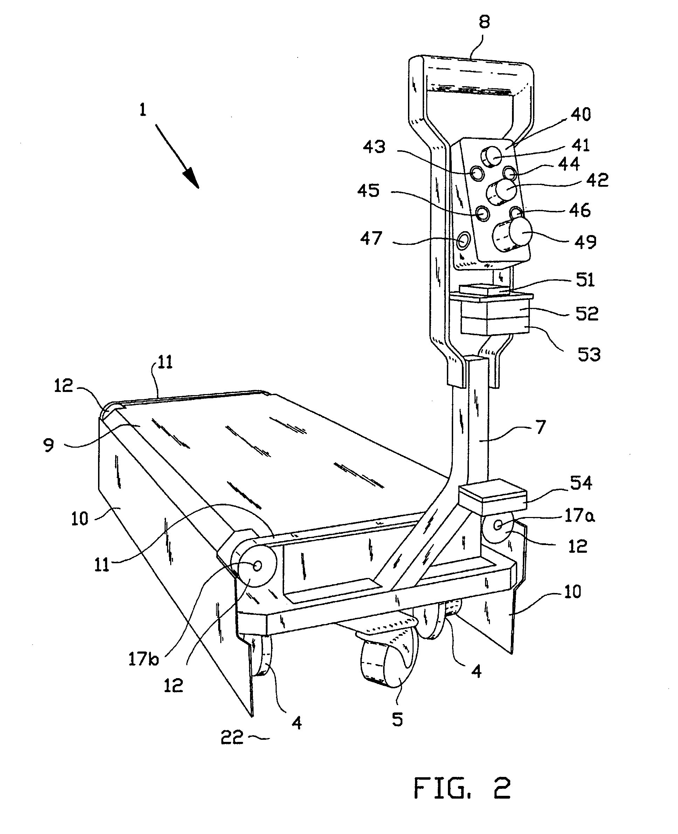

Figure 2 shows the work trolley 1 of figure 1 in perspective view, standing with running wheels 5 on a flat bottom 22. Buttons 41-49 have been arranged on the operation unit 40.

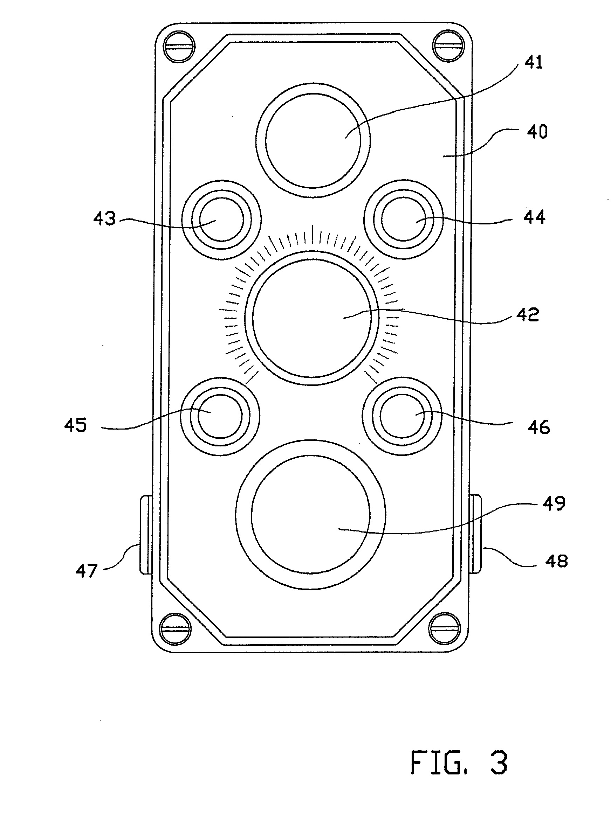

Figure 3 shows a front view of the operation unit 40. The following program options of the work trolley 1 can be selected by means of the buttons 41-49:
- Button 41:: "on" button, with this button the work trolley 1 can be brought from the "off" situation into the "on" situation; in the "off" situation the control unit 2, the conveyor belt motor 18, the trolley motor 3 and first, second, third and fourth photocell 51-54 are not provided with power.
- Button 42:: regulation of the speed of progressing of the work trolley 1 (regulation of the number of revolutions of the trolley motor 3);
- Button 43:: moving the work trolley 1 forward manually operated;
- Button 44:: moving the work trolley 1 backward manually operated;
- Button 45:: having an object automatically followed by the work trolley 1, or having the work trolley 1 automatically run ahead of the object;
- Button 46:: having the work trolley 1 move automatically onwards towards the end of the aisle;
- Button 47:: having the conveyor belts 11 move to the right;
- Button 48:: having the conveyor belts 11 move to the left;
- Button 49:: emergency stop.

Below the automatic function of following and running ahead, as well as the function of automatically having the work trolley 1 move towards the end of an aisle (return function) will be discussed.

### Function of following and running ahead

For this function the first, second and third photocell 51, 52, 53 are used. The control unit 2 has been programmed to activate the trolley motor 3 to move the work trolley 1 in retreating direction when both the first, second and third photocell 51, 52, 53 detect an object. When subsequently first photocell 51 no longer detects an object (the work trolley 1 is moved away from the object) trolley motor 3 is deactivated again. In case the first and second photocell 51, 52 do not detect an object and the third photocell 53 does, trolley motor 3 is activated to move the work trolley 1 in an approaching direction. When subsequently the second photocell 52 does detect the object again (the work trolley 1 is moved towards the object) trolley motor 3 is deactivated again.

The third photocell 53 also has the function, when the workman leaves the third distance range, to deactivate the trolley motor 3: the control unit 2 has been programmed to deactivate the trolley motor 3 when both the first, second and third photocell 51, 52, 53 do not detect an object. Thus the workman can have a coffee break or go to the toilet without the work trolley 1 keeping following, despite the fact that the second photocell 52 does not detect an object.

In table 1 the gear-switching behaviour of the work trolley 1 as discussed above is schematically shown. In the table + and - signs in the rows of the photocells regard the situation in which the photocell in question does or does not detect an object, respectively. A + and - sign in the row of the trolley motor 3 regards to it being in the activated situation and in the deactivated situation, respectively. It is also indicated here in which direction the work trolley 1 is driven.

**Table 1**

| distance range (mm) | 0 - 500 | 500 - 1000 | 1000 - 1500 | 1500 - 2000 | 2000 - further |
|---|---|---|---|---|---|
| photocell 51 | + | - | - | - | - |
| photocell 52 | + | + | - | - | - |
| photocell 53 | + | + | + | - | - |
| trolley motor 3 | + (backward) | - | + (forward) | - | - |

### return function

For this function the third and fourth photocell 53, 54 are used. The control unit 2 has been programmed to activate the trolley motor 3 to let the work trolley 1 move in forward direction to the end of the aisle when the button 46 is operated. Here forward direction is defined as the direction in which the sensors have been oriented for their detection action. When both the third and the fourth photocell 53, 54 detect an object the trolley motor 3 is deactivated again.

In table 2 the gear-switching behaviour of the work trolley 1 as discussed above is schematically shown. In the table + and - signs in the rows of the photocells regard the situation that the photocell in question does or does not detect an object, respectively. A + and - sign in the row of the trolley motor 3 regard its activated situation and its deactivated situation, respectively.

**Table 2**

| distance range (mm) | 0 - 1500 | 1500 - 2000 | 2000 - further |
|---|---|---|---|
| photocell 53 | + | - | - |
| photocell 54 | + | + | - |
| trolley motor 3 | - | + (backward) | + (forward) |

In addition to the functions that can be carried out by means of the operation buttons 41-49 the control unit 2 can carry out other functions. The work trolley 1 may for instance turn itself "off" when the registration signal of the photocells 51-54 has not changed for for instance 5 minutes.

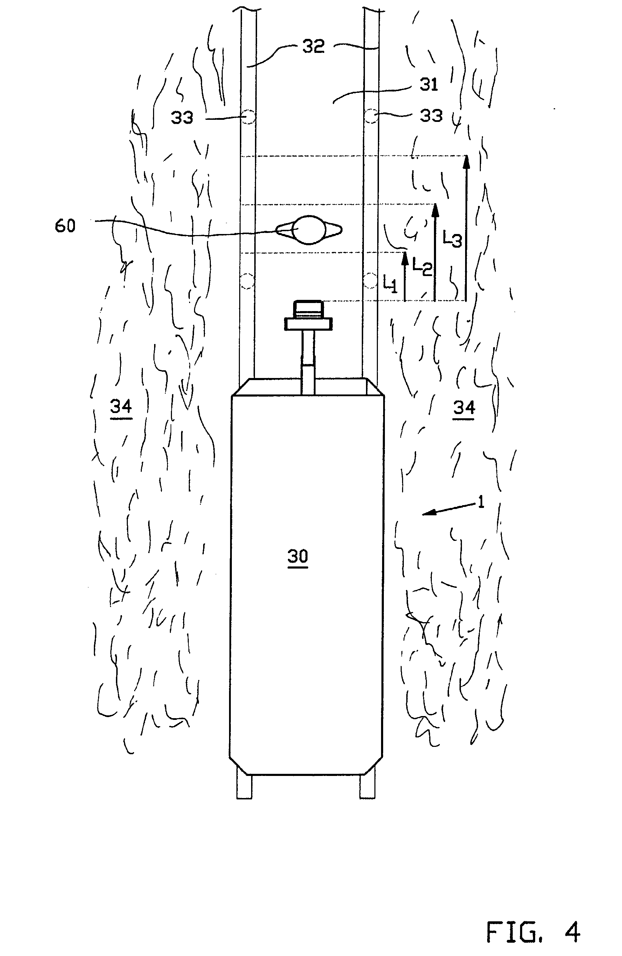

Figure 4 shows the work trolley 1 with a container 30 placed on it, which trolley rides on heating pipes 32 with supports 33 placed on either side of an aisle 31. Next to the aisle 31 there are seed-beds 34 with roses wherein the picked roses can be placed in the container 30. A person 60 is in the aisle 31 in the distance interval L₂ of 0 - 1000 mm but out of the distance interval L₁ of 0 - 500 mm. The work trolley's 1 automatic function of following and running ahead has been selected, as a result of which the trolley motor 3 has been deactivated, the work trolley 1 stands still. As soon as the person 60 comes into the distance interval L₁ the trolley motor 3 is activated so that the work trolley 1 retreats from the person 60. When the person 60 leaves the distance intervals L₁ and L₂, the trolley motor 3 is activated so that the work trolley 1 approaches the person 60. When the person 60 leaves the distance interval L₃ the trolley motor 3 is deactivated again.

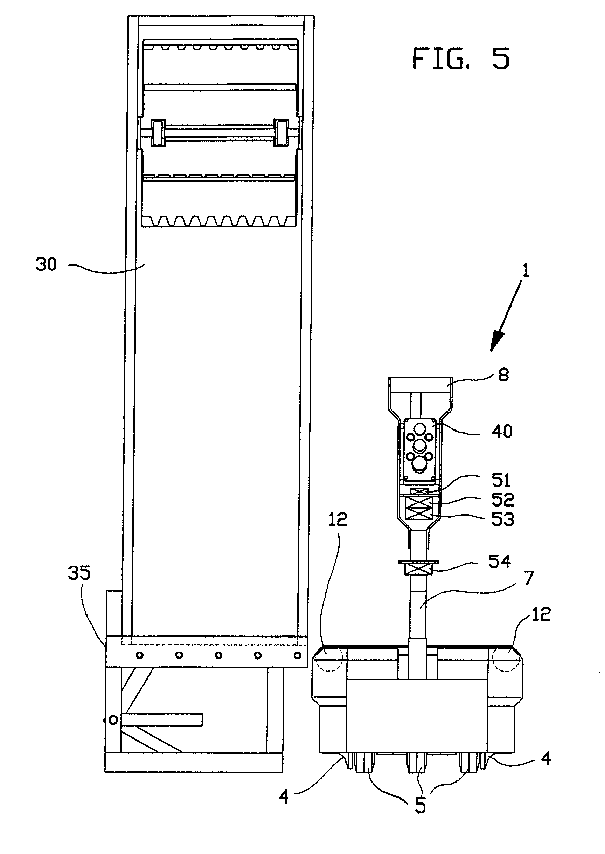

Figure 5 shows the work trolley 1 next to a container 30 placed on a frame 35. The frame 35 has such dimensions that the lower side of the container 30 is situated a little above the bearing surface 9 of the work trolley 1.

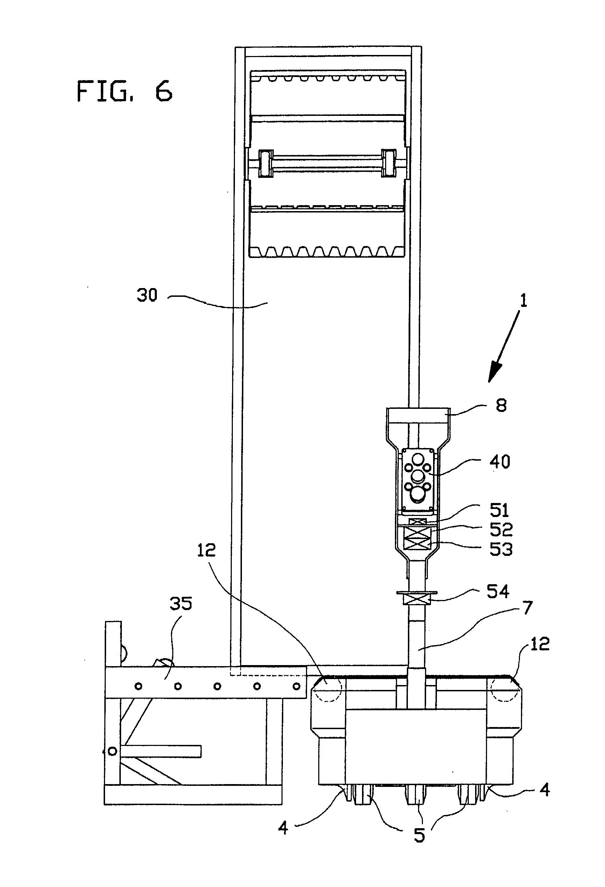

Figure 6 shows a view according to figure 5 in which the container 30 is rolled onto the work trolley 1 by means of the conveyor belts 11. To that end button 47 of the operation unit 40 has been operated.

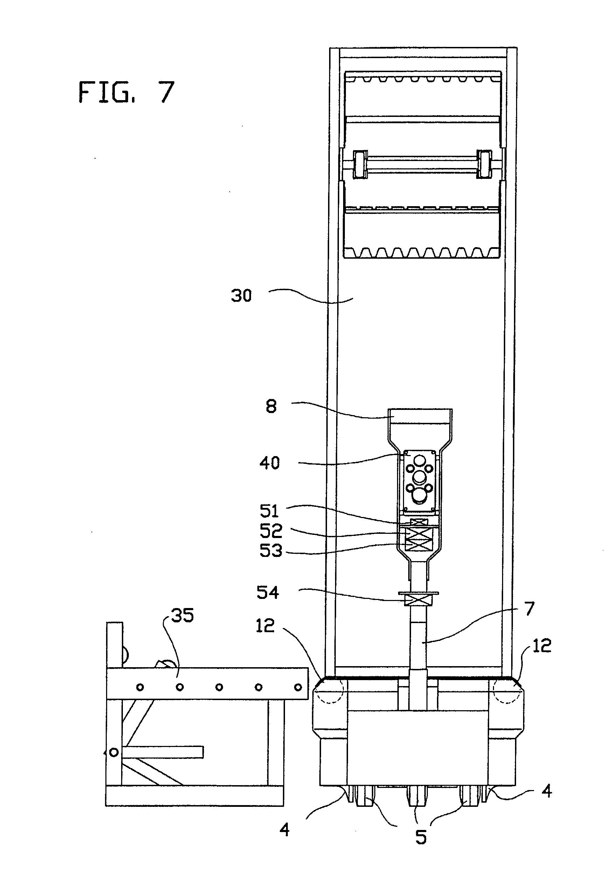

Figure 7 shows a view according to figure 5 in which the container 30 has been entirely rolled onto the work trolley 1.

## Claims

1. Work trolley for use in greenhouses, the work trolley being provided with means for detecting an object, for instance a person, the detection means delivering a registration signal as a result of the detection action, and with means for driving the work trolley, as well as means for operating the drive means in response to the received registration signal.

2. Work trolley according to claim 1, **characterized in that** the detection means comprise sensors having different distance ranges.

3. Work trolley according to claim 2, **characterized in that** the detection means comprise a first and second sensor having distance ranges of 0-L₁ (first distance range) and 0-L₂ (second distance range), respectively, in which L₁<L₂.

4. Work trolley according to claim 3, **characterized by** the operation means being adapted for activating the trolley drive in order to move the work trolley in retreating direction when the first sensor detects the object, and subsequently to deactivate the trolley drive when the first sensor no longer detects the object, and to activate the trolley drive to move the work trolley in an approaching direction when the second sensor does not detect the object, and subsequently to deactivate the trolley drive when the second sensor does detect the object again.

5. Work trolley according to claim 3 or 4, **characterized in that** the detection means comprise a third sensor having a distance range of 0-L₃ (third distance range) in which L₂<L₃, the operation means preferably being adapted for deactivating the trolley drive when the third sensor does not detect the object.

6. Work trolley according to claim 5, **characterized in that** the detection means comprise a fourth sensor having distance range of 0-L₄ (fourth distance range), the operation means preferably being adapted for deactivating the trolley drive when the fourth sensor detects the object, and the operation means being provided with selection means for selecting this program option.

7. Work trolley according to any one of the claims 3-6, **characterized in that** the operation means are adapted for activating or deactivating the trolley drive, the registration signals of several sensors being used as condition for activation or deactivation.

8. Work trolley according to any one of the claims 3-7, **characterized in that** the first and second sensor are formed by a first and second photocell.

9. Work trolley according to any one of the claims 5-8, when depending on claim 5, **characterized in that** the third sensor is formed by a third photocell.

10. Work trolley according to any one of the claims 6-9, when depending on claim 6, **characterized in that** the fourth sensor is formed by a fourth photocell.

11. Work trolley according to any one of the claims 1-7, **characterized in that** the detection means are formed by one single ultrasonic sensor.

12. Work trolley according to any one of the claims 3-11, **characterized in that** L₁ = 500 mm and L₂ = 1000 mm.

13. Work trolley according to any one of the claims 5-12, when depending on claim 5, **characterized in that** L₃ = 1500 mm.

14. Work trolley according to any one of the claims 6-13, when depending on claim 6, **characterized in that** L₄ = 2000 mm.

15. Work trolley according to any one of the preceding claims, **characterized in that** the operation means are formed by a control unit, the control unit preferably being a programmable plc control with data entering means and data storage means, the control unit preferably being provided with selection means for selecting the program options of the control unit.

16. Work trolley according to any one of the preceding claims, **characterized in that** the work trolley is provided with wheels for riding over heating pipes situated on either side of a path in the greenhouse, and with running wheels, the running wheels extending further downwards from the work trolley than the wheels for riding over the heating pipes.

17. Work trolley according to any one of the preceding claims, **characterized in that** the work trolley has been provided with a conveyor belt for rolling a container onto the work trolley, said conveyor belt slightly protruding with respect to the bearing surface of the work trolley.

18. Work trolley according to claim 17, **characterized in that** a conveyor belt has been provided on both ends of the work trolley, the conveyor belt having a circulation direction that is transverse to the direction of movement of the work trolley.

19. Work trolley according to claim 17 or 18, **characterized in that** a separate motor has been provided for driving the conveyor belt.

20. Work trolley according to any one of the preceding claims, **characterized in that** the drive means are formed by a trolley motor.
